# EUROPEAN PATENT SPECIFICATION

(11) **EP 3 795 410 B1**
(45) Date of publication and mention of the grant of the patent: **02.03.2022**
(21) Application number: 19198696.7
(22) Date of filing: 20.09.2019
(51) Int. Cl.: B60L 53/37, B60R 1/00

(54) **METHOD AND APPARATUS FOR DISPLAYING EGO-VEHICLE SURROUNDINGS WITHIN AN EGO-VEHICLE WITH SUPPORT OF ELECTRICAL CHARGING**
VERFAHREN UND VORRICHTUNG ZUR ANZEIGE VON EGO-FAHRZEUG-UMGEBUNGEN IN EINEM EGO-FAHRZEUG MIT UNTERSTÜTZUNG DER ELEKTRISCHEN AUFLADUNG
PROCÉDÉ ET APPAREIL D'AFFICHAGE D'ENVIRONNEMENT DE VÉHICULE EGO À L'INTÉRIEUR D'UN VÉHICULE EGO COMPORTANT UN SUPPORT DE CHARGE ÉLECTRIQUE

(43) Date of publication of application: 24.03.2021
(73) Proprietor: Continental Automotive GmbH, 30165 Hannover (DE)
(72) Inventor: Friebe, Markus, 90411 Nürnberg (DE); Gotur, Chetan, 90411 Nürnberg (DE); Prabhakar, Pavan Nag, 90411 Nürnberg (DE)
(74) Representative: Continental Corporation

(56) References cited:
- EP-A1- 3 363 675
- DE-A1-102013 207 907
- DE-A1-102018 008 564
- US-A1- 2016 332 573

## Description

The invention relates to a method of displaying ego-vehicle surroundings within an ego-vehicle. Further, the invention relates to an apparatus for a vehicle adapted to carry out such a method.

A vehicle may include a driver assistance system that displays a vehicle surroundings for a vehicle passenger inside the vehicle in a display device, such as a screen. Such a driver assistance system may also be referred to as a surround-view-system and usually comprises one or more vehicle cameras which are mounted on the vehicle and have different viewing areas or allow different viewing angles on the vehicle surroundings.

For such a surround-view-system, representing the surroundings as good as possible is desirable. The vehicle cameras mounted on the outside of the vehicle are able to provide information of the surroundings. Thereby, it may be desirable to display objects and/or infrastructure components in the vehicle surroundings to enable the driver of the vehicle to see them.

However, an individual field-of-view of the one or more vehicle cameras may be obscured by the vehicle itself, for example by a part of its body etc. Consequently, if an object or infrastructure components in the vehicle surroundings are obscured by the vehicle car itself, displaying them is not possible resulting in a blind spot.

EP 3 363 675 A1 describes a method and apparatus for aligning an electric vehicle comprising a battery with a charging pad adapted to charge the vehicle's battery, the method comprising the steps of processing captured images of the vehicle's surrounding to detect a charging pad, selecting in the captured images at least one reference pattern in the vicinity of the detected charging pad, and tracking the detected charging pad and the at least one selected reference pattern to steer the electric vehicle over the detected charging pad and to align the electric vehicle with the detected charging pad.

US 2016/0332573 A1 describes a vehicle system includes a camera and a display device. The camera is configured to capture an image and the display device is programmed to display the image. Each image includes a target, and the display device displays a virtual overlay on the image. The virtual overlay is displayed on the display device at a fixed location.

DE 10 2013 207 907 A1 describes inductive charging of a vehicle rechargeable battery.

Therefore, there may be a need to provide a possibility for improved representation of an ego-vehicle surroundings in an ego-vehicle.

The subject-matter of the independent claims provides a possibility for improved representation of an ego-vehicle surroundings in an ego-vehicle. Advantageous embodiments and further developments of the invention are indicated in the dependent claims, the description and the accompanying drawings.

The invention provides a method of displaying or representing an ego-vehicle surroundings within an ego-vehicle according to claim 1.

. The method comprises the following steps:
continuously capturing the ego-vehicle surroundings by at least one onboard camera to be stored in at least one camera data set,
detecting, within the captured ego-vehicle surroundings, an electrical charging base located in the ground or near the ground,
obtaining ego-vehicle motion information, and
generating, if a part of the ego-vehicle causes a blind spot to the electrical charging base by obscuring a field-of-view of the ego-vehicle camera, a synthetic view to replace the blind spot in a display, the synthetic view being generated based on at least one previous view of the captured ego-vehicle surroundings stored in the camera data set and being motion-compensated based on the ego-vehicle motion information.

The above method may be computer-implemented, and in particular may be carried out by an apparatus or a system, preferably a surround-view-system, as described below with respect to a second aspect. There may be two or more cameras mounted outside the ego-vehicle so as to have different viewing areas or allow different viewing angles on the ego-vehicle surroundings. As used herein, continuously capturing the ego-vehicle surroundings may comprise continuously acquiring images using the one or more cameras and storing them in one or more camera data sets, so as to preserve previous image data and/or previous frame data from the one or more cameras. The method may be initiated by turning the ego-vehicle on and/or by turning the surround-view-system on. The electrical charging base may be adapted to supply an electrical system of the ego-vehicle with electrical energy without contact, e.g. inductively, for example to charge an energy storage device of the ego-vehicle. For this purpose, the ego-vehicle may comprise an onboard counterpart for the electrical charging base, such as an onboard electrical charging device, of the ego-vehicle. The electrical charging base and/or the onboard counterpart may be comprise a pad. It may comprise one or more electrical conductive surfaces.

The provided method allows for improved representing the ego-vehicle surroundings within the ego-vehicle, and in particular to represent one or more objections and/or infrastructure components in the ego-vehicle surroundings, such as an electrical charging base, even when one or more field-of-views of the surround-view-system is obscured by the ego-vehicle itself. The provided method may allow to improve aligning the electrical charging base with the onboard counterpart, such as an onboard electrical charging device, of the ego-vehicle. This may improve or increase efficiency of ego-vehicle maneuver, and a respective target area, such as the electrical charging base, located within the blind spot may be reached with higher precision and/or faster. Further, there is no need for an additional sensing device adapted to detect an electrical charging base.

According to the invention, the method further comprises displaying, within the ego-vehicle, the synthetic view replacing the blind spot with including a virtual representative of the obscured electrical charging base. Thus, aligning the electrical charging base with the onboard counterpart may be further improved, as an estimated current position of one or both thereof may be displayed within the ego-vehicle.

In an embodiment, the method may further comprise displaying, within the ego-vehicle, a virtual representative of at least a part of the ego-vehicle itself and a virtual representative of at least a part of an onboard electrical charging device of the ego-vehicle. Thus, aligning the electrical charging base with the onboard counterpart of the ego-vehicle may be further improved, as an estimated current position of one or both thereof may be displayed within the ego-vehicle.

According to an embodiment, the step of generating the synthetic view may further comprise constructing a historical ground plane view using at least one previous view captured by the camera and stored in the camera data set. Thus, there may be a realistic display or representation of the ego-vehicle surroundings, as the synthetic view is based on one or more previously captured images . In an embodiment, the step of generating the synthetic view may further comprise rendering a blind spot ground plane. Thus, replacing the blind spot may be further improved by using quite realistic views or images, respectively.

According to an embodiment, the method may further comprise generating one or more overlay points, the overlay points or overlap points associated with the electrical charging base and/or with the onboard counterpart of the ego-vehicle. Thus, aligning the electrical charging base with the onboard counterpart of the ego-vehicle may be further improved, as an estimated current absolute position of one or both thereof and/or a relative position between both may be displayed within the ego-vehicle.

In an embodiment, the method may further comprise rendering an overlay or overlap of the electrical charging base and/or the onboard counterpart of the ego-vehicle on top of a body of the ego-vehicle, and in particular on a virtual representative thereof to be displayed. Thus, aligning the electrical charging base with the onboard counterpart of the ego-vehicle may be further improved, as an estimated current position of one or both thereof may be displayed within the ego-vehicle, as the current absolute position or the relative position may be determined more feasible.

According to the invention, the method further comprises determining a proportion of an overlap between the electrical charging base included in the synthetic view and an onboard electrical charging device of the ego-vehicle, the physical electrical charging device of the ego-vehicle not being visible from inside the ego-vehicle.

In an embodiment, the method may further comprise displaying, within the ego-vehicle, a value, preferably represented by at least one of a percentage value, a ratio value or a graphical diagram, associated with the determined proportion of the overlap. Thus, the alignment may be determined even more precisely.

According to the invention, the method further comprises estimating a charging duration of an onboard energy storage of the ego-vehicle based on the determined proportion of the overlap. For example, a higher degree of alignment, which can mean a higher degree of overlap, may provide a higher energy transmission between the electrical charging base and the onboard counterpart. Likewise, a lower degree of alignment, which can mean a lower degree of overlap, may provide a lower energy transmission between the electrical charging base and the onboard counterpart. On this basis, the charging duration, indicated as a time value, can be estimated. The estimated charging duration may be displayed within the ego-vehicle using, for example, a percentage value, a ratio value or a graphical diagram.

According to the invention, the method further comprises estimating a charging efficiency based on the determined proportion of the overlap. The efficiency may be proportional to the degree of alignment, so that the estimation can be performed on this basis. The efficiency may be displayed within the ego-vehicle using, for example, a percentage value, a ratio value or a graphical diagram. A second aspect provides an apparatus or system for displaying ego-vehicle surroundings within an ego-vehicle, comprising:
at least one onboard display device arranged within the ego-vehicle,
at least one onboard camera arranged to have a field-of-view on the ego-vehicle surroundings,
an optional onboard energy storage,
an onboard electrical charging device, adapted to interact with an electrical charging base located in the ground or near the ground in the ego-vehicle surrounds for providing electrical, e.g. wireless or inductive, charging, e.g. for charging the energy storage, and
a data processing means, which may optionally comprise at least one processor, adapted to carry out the method according to any one of the embodiments of the first aspect.

Optionally, the apparatus or system may comprise one or more communication interfaces to obtain onboard vehicle information, such as ego-vehicle motion information, e.g. also from other onboard systems. It may optionally comprise a memory for storing a computer program comprising instructions, which when executed by a processor may carry out the method of the first aspect.

In the following, exemplarily embodiments of the invention will be explained in more detail with reference to the accompanying figures.
- Fig. 1: shows a vehicle comprising a driver assistance system according to an aspect, which is configured to perform a method according to an aspect,
- Fig. 2: shows the vehicle of Fig. 1, wherein the vehicle, in view of Fig. 1, moved in an exemplary direction,
- Fig. 3: shows a flow chart of a method according to an aspect.

The figures are merely schematic representations and serve only to illustrate the invention. Identical or equivalent elements are consistently provided with the same reference signs.

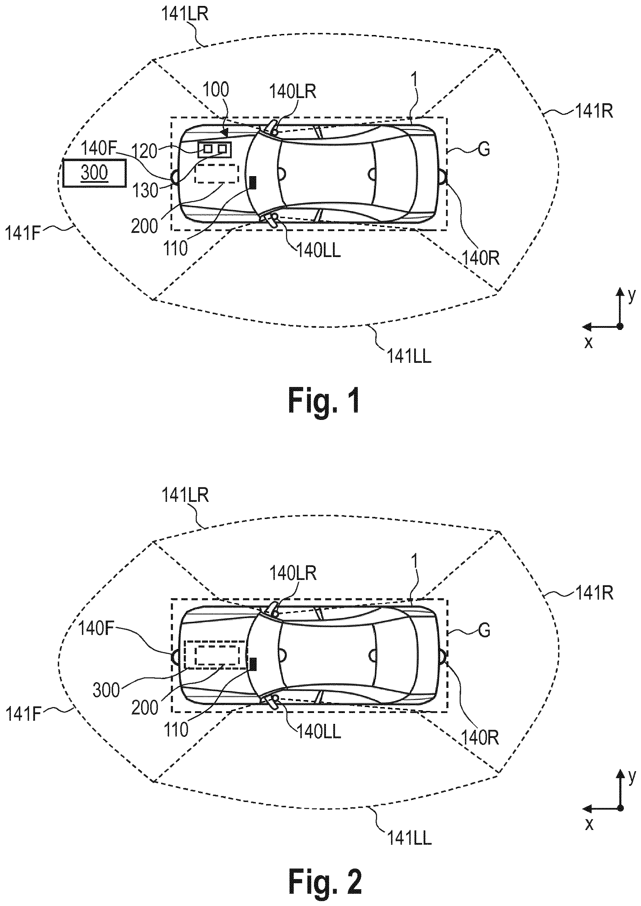

Figure 1 shows an ego-vehicle 1, which in the following is referred to as vehicle 1, standing on a ground plane G and being freely movable in an x-y plane. Vehicle 1 has a system 100 in the form of a driver assistance system and/or surround-view system.

The system 100 allows a vehicle passenger to obtain a surround view of a current vehicle surroundings inside the vehicle 1.

For this purpose, system 100 comprises a display device 110 arranged in the interior of vehicle 1, e.g. in form of a screen capable for visually representing an image I. Furthermore, system 100 has a data processing means 120, which interacts with display device 110, with at least one processor and a memory device 130. In addition, system 100 has a plurality of vehicle cameras 140F, 140R, 140LL, 140LR mounted at different positions of vehicle 1 and having different field-of-views or view areas 141F, 141R, 141LL, 141LR. In particular, camera 140F is arranged at front, camera 140R is arranged at rear, camera 140LL is arranged lateral left and camera 140LR is arranged lateral right. Field-of-views or viewing areas 141F, 141R, 141LL, 141LR may be detected as the respective camera image I_F, I_R, I_LL, I_LR and be reproduced directly in display device 110 and/or possibly stored (at least temporarily) in memory device 130 as one or more one camera data sets. For representation of the vehicle surroundings, one or more of camera images I_F, I_R, I_LL, I_LR may be taken or combined by data processing means 120 to form or generate a view of the vehicle surroundings to be displayed in display device 110.

Vehicle 1 further comprises an onboard electrical charging device 200, which may be arranged in an area of an underbody, under the bonnet, under the trunk etc. of vehicle 1. It may be adapted to interact with an electrical charging base 300 located in or on the ground or near the ground in the vehicle surroundings for providing wireless charging, e.g. for charging an energy storage. Optionally, vehicle 1 may comprise an onboard energy storage (not shown), e.g. a battery, which may be adapted to be electrically charged by electrical charging base 300 via onboard electrical charging device 200. Both, electrical charging base 300 and onboard electrical charging device 200 may be adapted to charge without direct contact and/or to charge wireless, wherein a contact may be given. For this purpose, electrical charging base 300 and onboard electrical charging device 200 may comprise one or more electrical conductive surfaces, pins, or the like. It is noted, however, that it may be needed to align electrical charging base 300 and onboard electrical charging device 200 in order to electrically charge vehicle 1. Alignment may also be referred to as an overlay or overlap of said components in the vehicle vertical direction, which may be transverse or perpendicular to the x-y plane.

Still referring to Figure 1, as long as electrical charging base 300 is arranged in one of field-of-views or viewing areas 141F, 141R, 141LL, 141LR of cameras 140F, 140R, 140LL, 140LR, it can be seen from inside vehicle 1, either directly or virtually via display device 110. However, if vehicle 1 moves toward electrical charging base 300, a part of vehicle 1, e.g. its body, bonnet etc., may cover electrical charging base 300 and none of cameras 140F, 140R, 140LL, 140LR may be able to capture it. In other words, the respective part of vehicle 1 may cause a blind spot to the electrical charging base 300 by obscuring some or all of the field-of-views or viewing areas 141F, 141R, 141LL, 141LR of cameras 140F, 140R, 140LL, and 140LR.

Figure 2 shows such a situation, wherein vehicle 1, in view of Figure 1, moved, for example, in the x direction, so that electrical charging base 300 is now part of a blind spot as the field-of-view of cameras 140F, 140R, 140LL, 140LR is obscured by vehicle 1 itself. In addition, Figure 2 shows an alignment of electrical charging base 300 and onboard electrical charging device 200 aimed at for electrical charging of vehicle 1. Although a full alignment of about 100 % is shown, in practice, this value may be lower and still be sufficient to charge vehicle 1, but possibly with a longer charging time and/or a lower efficiency.

Still referring to Figure 2, system 100 may deal with a situation as shown as described in the following. For this purpose, data processing means 120 may be adapted to process instructions of a computer program stored in memory 130, wherein the instructions cause system 100 to carry out the following method.

One or more of cameras 140F, 140R, 140LL, and 140LR may continuously capture the surroundings and store it in at least one camera data set. On basis of the captures and/or the camera data set, it may be automatically detected, within the captured images and/or frames of the ego-vehicle surroundings, whether or not electrical charging base 300 is present. Of course, detecting may also be performed manually by the vehicle passenger.

Further, from onboard data of vehicle 1 or by processing the captured images and/or frames to obtain odometry data or the like, vehicle motion information may be obtained. These vehicle motion information may comprise one or more of a direction in which the vehicle is oriented, a vehicle speed, a remaining distance towards electrical charging base 300, or the like.

Further, if a part of vehicle 1 causes the above-discussed blind spot to electrical charging base 300 by obscuring one or more field-of-views of cameras 140F, 140R, 140LL, 140LR, a synthetic view may be generated. The synthetic view may be adapted to replace the blind spot in display device 110. To generate the synthetic view at least one previous view, such as a captured image and/or frame, of the vehicle surroundings stored in the camera data set is used as a basis. For example, a historical view of ground plane G may be constructed using the previously stored camera data. Using the above vehicle motion information, the view may be motion-compensated and/or rendered. Further, the blind spot may be rendered on basis of some or all of said data. In display device 110, the generated synthetic view may be displayed which still shows electrical charging base 300 as this was included in the previously captured views, i.e. the previous image(s) and/or frame(s). As vehicle 1 continues to move, the synthetic view is further updated using one or more previous synthetic views, e.g. images and/or frames, as a basis. This means that the electrical charging base 300 remains visible in display device 110 even though it has not been able to be captured by cameras 140F, 140R, 140LL, 140LR for several images and/or frames.

Further, one or more overlay and/or overlap points between electrical charging base 300 and onboard electrical charging device 200 may be generated, determined, or the like. These one or more points may be rendered on a virtual representative of at least a part of vehicle 1 itself and a virtual representative of at least a part of onboard electrical charging device 200 of vehicle 1 and/or a virtual representative of the obscured electrical charging base 300. As a result, display device 110 may show the virtual representatives moving relative to each other.

Once electrical charging base 300 and onboard electrical charging device 200 are at least partially overlap, a proportion, such as a percentage, of alignment, i.e. a matching area, may be estimated and optionally displayed. This may be displayed figurative and/or graphically etc.

On this basis, an expected charging time and/or an efficiency of charging may be estimated and optionally shown to the vehicle passenger.

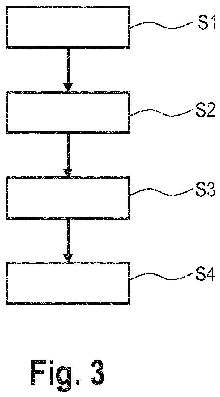

Figure 3 shows the method described above in a flow chart. In a step S1, the vehicle surroundings is continuously captured by at least one of cameras 140F, 140R, 140LL, and 140LR to be stored in the at least one camera data set. In a step S2, the electrical charging base 300 is detected within the captured ego-vehicle surroundings. In a step S3, the vehicle motion information is obtained. In a step S4, the synthetic view to replace the blind spot in display device 110 is generated, wherein the synthetic view being generated based on at least one previous view of the captured ego-vehicle surroundings stored in the camera data set and being motion-compensated based on the ego-vehicle motion information.

## Claims

1. A method of displaying ego-vehicle surroundings within an ego-vehicle (1), comprising:
- continuously capturing the ego-vehicle surroundings by at least one onboard camera (140F, 140R, 140LL, 140LR) to be stored in at least one camera data set,
- detecting, within the captured ego-vehicle surroundings, an electrical charging base (300) located in the ground or near the ground (G),
- obtaining ego-vehicle motion information,
- generating, if a part of the ego-vehicle (1) causes a blind spot to the electrical charging base (300) by obscuring a field-of-view of the ego-vehicle camera (140F, 140R, 140LL, 140LR), a synthetic view to replace the blind spot in a display (110), the synthetic view being generated based on at least one previous view of the captured ego-vehicle surroundings stored in the camera data set and being motion-compensated based on the ego-vehicle motion information,
- determining a proportion of an overlap between the electrical charging base included in the synthetic view and an onboard electrical charging device of the ego-vehicle, the physical electrical charging device of the ego-vehicle not being visible from inside the ego-vehicle, and
- estimating a charging duration of an onboard energy storage of the ego-vehicle based on the determined proportion of the overlap,
- estimating a charging efficiency based on the determined proportion of the overlap.

2. The method of claim 1, further comprising:
displaying, within the ego-vehicle, the synthetic view replacing the blind spot with including a virtual representative of the obscured electrical charging base.

3. The method of claim 1 or 2, further comprising:
displaying, within the ego-vehicle, a virtual representative of at least a part of the ego-vehicle itself and a virtual representative of at least a part of an onboard electrical charging device of the ego-vehicle (1).

4. The method of any one of the preceding claims, wherein the step of generating the synthetic view further comprises constructing a historical ground plane view using at least one previous view captured by the camera and stored in the camera data set.

5. The method of any one of the preceding claims, wherein the step of generating the synthetic view further comprises rendering the blind spot ground plane.

6. The method of any one of the preceding claims, further comprising:
displaying, within the ego-vehicle, a value, preferably represented by at least one of a percentage value, a ratio value or a graphical diagram, associated with the determined proportion of the overlap.

7. Apparatus for displaying ego-vehicle surroundings within an ego-vehicle (1), comprising:
- at least one onboard display device (110) arranged within the ego-vehicle (1),
- at least one onboard camera (140F, 140R, 140LL, 140LR) arranged to have a field-of-view on the ego-vehicle surroundings,
- an onboard electrical charging device (200), adapted to interact with an electrical charging base (300) located in the ground or near the ground in the ego-vehicle surrounds for providing electrical charging, and
- a data processing means (120) adapted to carry out the method according to any one of claims 1 to 6.

## Patentansprüche

1. Verfahren zur Anzeige von Ego-Fahrzeug-Umgebungen in einem Ego-Fahrzeug (1), das Folgendes aufweist:
- kontinuierliches Erfassen der Ego-Fahrzeug-Umgebungen durch zumindest eine bordinterne Kamera (140F, 140R, 140LL, 140LR), zu speichern in zumindest einem Kameradatensatz,
- Detektieren, in den erfassten Ego-Fahrzeug-Umgebungen, einer elektrischen Ladebasis (300), befindlich im Boden oder in der Nähe des Bodens (G),
- Erhalten von Ego-Fahrzeugbewegungsinformationen,
- Erzeugen, wenn ein Teil des Ego-Fahrzeugs (1) einen blinden Fleck für die elektrische Ladebasis (300) verursacht durch Verdecken eines Sichtfelds der Ego-Fahrzeug-Kamera (140F, 140R, 140LL, 140LR), einer synthetischen Ansicht zum Ersetzen des blinden Flecks in einer Anzeigevorrichtung (110), wobei die synthetische Ansicht basierend auf zumindest einer vorherigen Ansicht der erfassten Ego-Fahrzeug-Umgebungen, gespeichert im Kameradatensatz, erzeugt wird und basierend auf den Ego-Fahrzeug-Bewegungsinformationen bewegungskompensiert wird,
- Bestimmen eines Anteils einer Überlappung zwischen der elektrischen Ladebasis, enthalten in der synthetischen Ansicht und einer bordinternen elektrische Ladevorrichtung des Ego-Fahrzeugs, wobei die physische elektrische Ladevorrichtung des Ego-Fahrzeugs aus dem Inneren des Ego-Fahrzeugs nicht sichtbar ist, und
- Schätzen einer Ladedauer eines bordinternen Energiespeichers des Ego-Fahrzeugs basierend auf dem bestimmten Anteil der Überlappung,
- Schätzen einer Ladeeffizienz basierend auf dem bestimmten Anteil der Überlappung.

2. Verfahren nach Anspruch 1, das ferner Folgendes aufweist:
Anzeigen, im Ego-Fahrzeug, der synthetischen Ansicht, die den blinden Fleck ersetzt, einschließlich einer virtuellen Darstellung der verdeckten elektrischen Ladebasis.

3. Verfahren nach Anspruch 1 oder 2, das ferner Folgendes aufweist:
Anzeigen, im Ego-Fahrzeug, einer virtuellen Darstellung von zumindest einem Teil des Ego-Fahrzeugs selbst und einer virtuellen Darstellung von zumindest einem Teil einer bordinternen elektrischen Ladevorrichtung des Ego-Fahrzeugs (1).

4. Verfahren nach einem der vorhergehenden Ansprüche, wobei der Schritt des Erzeugens der synthetischen Ansicht Konstruieren einer historischen Grundebene unter Verwendung zumindest einer vorherigen, durch die Kamera erfassten und im Kameradatensatz gespeicherten Ansicht aufweist.

5. Verfahren nach einem der vorhergehenden Ansprüche, wobei der Schritt des Erzeugens der synthetischen Ansicht Darstellen der Grundebene des blinden Flecks aufweist.

6. Verfahren nach einem der vorhergehenden Ansprüche, das ferner Folgendes aufweist:
Anzeigen, im Ego-Fahrzeug, eines Wertes, vorzugsweise repräsentiert durch zumindest eines aus einem Prozentwert, einem Verhältniswert oder einem grafischen Diagramm, in Verbindung mit dem bestimmten Anteil der Überlappung.

7. Vorrichtung zur Anzeige von Ego-Fahrzeug-Umgebungen in einem Ego-Fahrzeug (1), das Folgendes aufweist:
- zumindest eine bordinterne Anzeigevorrichtung (110), angeordnet im Ego-Fahrzeug (1),
- zumindest eine bordinterne Kamera (140F, 140R, 140LL, 140LR), dazu angeordnet, ein Sichtfeld der Ego-Fahrzeug-Umgebungen zu haben,
- eine bordinterne elektrische Ladevorrichtung (200), angepasst zum Interagieren mit einer elektrischen Ladebasis (300), befindlich im Boden oder in der Nähe des Bodens in den Ego-Fahrzeug-Umgebungen zum Bereitstellen von elektrischem Laden, und
- ein Datenverarbeitungsmittel (120), angepasst zum Ausführen des Verfahrens nach einem der Ansprüche 1 bis 6.

## Revendications

1. Procédé d'affichage d'environs d'un propre véhicule à l'intérieur d'un propre véhicule (1), comportant les étapes consistant à :
- faire capturer en continu les environs du propre véhicule par au moins une caméra embarquée (140F, 140R, 140LL, 140LR), à stocker dans au moins un ensemble de données de caméra,
- détecter, à l'intérieur des environs capturés du propre véhicule, une base (300) de charge électrique situé dans le sol ou près du sol (G),
- obtenir des informations de mouvement du propre véhicule,
- générer, si une partie du propre véhicule (1) cause un angle mort par rapport à la base (300) de charge électrique en occultant un champ de vision de la caméra (140F, 140R, 140LL, 140LR) du propre véhicule, une vue synthétique pour remplacer l'angle mort dans un affichage (110), la vue synthétique étant générée d'après au moins une vue précédente des environs capturés du propre véhicule stockés dans l'ensemble de données de caméra et étant compensée en mouvement d'après les informations de mouvement du propre véhicule,
- déterminer une proportion d'un recouvrement entre la base de charge électrique compris dans la vue synthétique et un dispositif embarqué de charge électrique du propre véhicule, le dispositif physique de charge électrique du propre véhicule n'étant pas visible depuis l'intérieur du propre véhicule, et
- estimer une durée de charge d'un stockage embarqué d'énergie du propre véhicule d'après la proportion déterminée du recouvrement,
- estimer un rendement de charge d'après la proportion déterminée du recouvrement.

2. Procédé selon la revendication 1, comportant en outre :
l'affichage, à l'intérieur du propre véhicule, de la vue synthétique remplaçant l'angle mort par l'inclusion d'une représentation virtuelle de la base de charge électrique occultée.

3. Procédé selon la revendication 1 ou 2, comportant en outre :
l'affichage, à l'intérieur du propre véhicule, d'une représentation virtuelle d'au moins une partie du propre véhicule lui-même et d'une représentation virtuelle d'au moins une partie d'un dispositif embarqué de charge électrique du propre véhicule (1).

4. Procédé selon l'une quelconque des revendications précédentes, l'étape de génération de la vue synthétique comportant en outre la construction d'une vue historique du plan de sol en utilisant au moins une vue précédente capturée par la camera et stockée dans l'ensemble de données de caméra.

5. Procédé selon l'une quelconque des revendications précédentes, l'étape de génération de la vue synthétique comportant en outre le rendu du plan de sol de l'angle mort.

6. Procédé selon l'une quelconque des revendications précédentes, comportant en outre :
l'affichage, à l'intérieur du propre véhicule, d'une valeur, de préférence représentée par au moins un élément parmi une valeur de pourcentage, une valeur de rapport ou un diagramme graphique, associé à la proportion déterminée du recouvrement.

7. Appareil d'affichage d'environs du propre véhicule à l'intérieur d'un propre véhicule (1), comportant :
- au moins un dispositif embarqué (110) d'affichage disposé à l'intérieur du propre véhicule (1),
- au moins une caméra embarquée (140F, 140R, 140LL, 140LR) disposée pour posséder un champ de vision sur les environs du propre véhicule,
- un dispositif embarqué (200) de charge électrique, prévu pour interagir avec une base (300) de charge électrique situé dans le sol ou près du sol dans les environs du propre véhicule pour assurer une charge électrique, et
- un moyen (120) de traitement de données prévu pour réaliser le procédé selon l'une quelconque des revendications 1 à 6.
